# EUROPÄISCHE PATENTSCHRIFT

(11) **EP 2 243 583 B1**
(45) Veröffentlichungstag und Bekanntmachung des Hinweises auf die Patenterteilung: **27.06.2012**
(21) Anmeldenummer: 10002239.1
(22) Anmeldetag: 04.03.2010
(51) Int. Cl.: B23F 19/10, F16D 3/20

(54) **Anordnung zur Verbindung eines Werkzeugrads und einer Werkzeugaufnahme**
Assembly for connecting a tool wheel and a tool holder
Agencement de connexion d'une roue de véhicule et d'une cavité

(30) Priorität: 22.04.2009 DE 102009018392
(43) Veröffentlichungstag der Anmeldung: 27.10.2010
(73) Patentinhaber: THE GLEASON WORKS, Rochester, New York 14607-1282 (US)
(72) Erfinder: Schäferling, Karl, 85716 Unterschleissheim (DE); Reichert, Gerhard, 82216 Maisach (DE)
(74) Vertreter: Leinweber & Zimmermann

(56) Entgegenhaltungen:
- DE-A1- 2 256 092
- DE-A1- 19 530 978
- DE-A1- 19 613 462
- DE-C1- 3 619 537
- DE-C1- 3 722 097
- DE-C1- 3 905 168
- US-A- 5 738 586
- US-A1- 2004 121 845

## Beschreibung

Die Erfindung betrifft eine Anordnung zur drehfesten Verbindung zwischen einem zur Bearbeitung endseitiger Randbereiche von Zahnflanken verzahnter Werkstückräder dienenden, eine Drehachse aufweisenden verzahnten Werkzeugrad und einer um eine Drehachse drehend antreibbaren Werkzeugaufnahme, gemäß dem Oberbegriff von Anspruch 1.

Derartige Anordnungen sind bekannt, beispielsweise aus der EP 1 270 127 A1. Sie dienen z. B. der Entfernung von bei der spanenden Herstellung (z. B. Wälzfräsen) von Zahnrädern an den stirnseitigen Randbereichen der Zahnflanken gebildeten Grate, die aus mehreren Gründen zu erfolgen hat. Einer der Gründe liegt darin, daß eine Stirnfläche des Zahnrads in nachfolgenden Arbeitsgängen oft als planare Spann- oder Bestimmungsfläche dienen soll, deren Planarität durch den Grat gestört wird. Weiterhin würde der Grat nach der Härtung die Gefahr nach sich ziehen, daß der beim späteren Lauf des Zahnrades in einem Getriebe abspringt und eine Beschädigung der Zahnflanken oder von Getriebeteilen herbeiführt. Davon abgesehen stellt ein solcher Grat auch eine Verletzungsgefahr bei der Handhabung der Werkstückräder dar. Weiterhin ist es nicht ausreichend, lediglich den Grat zu beseitigen, weil die verbleibende Zahnkante beim Härten durch Überkohlung glashart werden kann und dann unter Belastung ausbricht.

Zur Vermeidung dieser Nachteile werden die endseitigen Randbereiche der Zahnflanken von einem oben genannten Werkzeugrad bearbeitet, um die Zahnkante in eine Fase umzuformen. Dazu wird das Werkzeugrad in eine Werkzeugaufnahme fest eingespannt, wobei die Drehachsen von Werkzeugrad und Werkzeugaufnahme zusammenfallen, und das Werkzeugrad wird in drehenden Eingriff mit dem zu bearbeitenden Werkstückrad gebracht. Die erforderliche Drehantriebskraft wird von einer Werkzeugspindel über die Werkzeugaufnahme auf das Werkzeugrad übertragen. Es können Bearbeitungen wie die Entgratung, das Bilden der Fase oder das Glätten der stirnseitigen Randbereiche der Zahnflanken des Werkstückrads vorgenommen werden.

Ein dazu geeignetes Werkzeugrad ist beispielsweise aus zwei bearbeitenden Entgraträdern gebildet, die mit einer Distanzscheibe zwischen sich zu einem kompakten Werkzeugrad montiert sind. Anstelle der Distanzscheibe kann auch ein stirnverzahntes Führungsrad verwendet werden. Da bei der Umarbeitung der Zahnkanten in die Fasen in den an die Fasen angrenzenden Randbereichen der Zahnflanken Sekundärgrate aufgeworfen werden, ist es vorteilhaft, das Führungsrad, wie beispielsweise in EP 1 270 127 A1 über einen Teil seines Umfangs als Glättrad auszubilden, mit dem die Sekundärgrate glatt gedrückt werden.

Das Werkzeugrad ist in der Form seiner Verzahnung an die Verzahnung des Werkstückrads angepaßt, insbesondere sind bei Schrägverzahnung die Schrägungswinkel aneinander angepaßt. Genauer gesagt ist für den Erhalt eines optimalen Bearbeitungsergebnis das Werkzeugrad exakt den Vorhaltewerten des Werkstücks anzupassen. Ansonsten sind Materialaufwürfe auf den Zahnflanken des Werkstücks zu besorgen, die bei einer anschließenden Hartfeinbearbeitung des Werkstücks zu vorzeitigem Werkzeugverschleiß führen können.

Bereits aus Fertigungstoleranzen beim Wälzfräsen der Werkstückräder können sich allerdings die Vorhaltewerte der Werkstückräder chargenweise ändern, so daß die exakte Anpassung eines Werkzeugrads an unterschiedliche Chargen ansonsten gleichartiger Werkstückräder nicht mehr gegeben ist. Vergleichbares gilt, wenn im Hinblick auf das spätere Härten der Werkstückräder aufgrund unterschiedlicher Werkstoffe oder unterschiedlichen Härteöfen eine Änderung der Vorhaltewerten zu besorgen ist.

Einfach ausgedrückt paßt das Werkzeugrad nicht mehr genau genug für die Bearbeitung der Werkstückräder, wenn sich deren Verzahnungsparameter bereits in geringem Maße ändern. Bei einem einstückig gebildeten Werkzeugrad bleibt für die Bearbeitung mehrerer derartig unterschiedlicher Chargen von Werkzeugrädern lediglich das Umschleifen der Verzahnung des Werkzeugrads.

Um diesen aufwendigen Prozeß zu vermeiden, wird in der EP 1 270 127 A1 vorgeschlagen, das Werkzeugrad in der Mitte zu teilen, so daß sich die zur Bearbeitung entgegengesetzter Stirnseiten der Werkstückräder dienenden Werkzeugradhälften gegeneinander verdreht und mit einem beliebig wählbaren umfangmäßiger Positionierung zueinander angeordnet werden können. Durch eine geeignete Anordnung kann das Werkzeugrad dann für jede unterschiedliche Charge exakt eingestellt werden. Diese Einstellung ist aber zeitaufwendig und mühsam, da sie sehr genau zu erfolgen hat.

DE 39 05 168 C2 und DE 36 19 537 C1 zeigen weitere Beispiele der bereits oben beschriebenen Vorrichtung zum Brechen und Entgraten der Stirnkanten eines verzahnten Werkrades gemäß dem Oberbegriff des Anspruchs 1.

US 5,738,586 betrifft eine Kugel- und Pfannenkopplung zwischen einem muttern- oder schraubendrehenden Werkzeug und einem mit einem Kopf eines Schraubenziehers koppelbaren Patrizenteils.

DE 195 30 978 A1 betrifft ein Wellengelenk einer Exzenterschneckenpumpe.

US 2004/0121845 A1 betrifft eine Kopplungseinrichtung, um einem Werkzeug nichtgeradlinigen Zugang zu verschaffen.

DE 37 22 097 C1 betrifft eine Drehgelenkkupplung für eine Exzenterschneckenmaschine.

DE 22 56 092 betrifft einen Regenerativ-Wärmetauscher einer Gasturbine, bei der eine Wärmetauscherscheibe kuppelartig zwischen beiderseits der Wärmetauscherscheibe angeordneten Kalotten gelagert ist.

DE 196 13 462 A1 betrifft eine Gelenkverbindung zwischen einer Welle und einer Nabe mit einer Anwendung als Verbindung zwischen einem Schraubendreher und einer Schraube.

DE 39 05 168 C1 offenbart eine Vorrichtung zum Brechen und Entkraten der Stirnkanten eines verzahnten Werkrades, bei der zwei Werkzeughälften auf einer Achse axial verschiebbar angeordnet sind.

DE 36 19 537 C1 betrifft eine Vorrichtung zum Entkraten oder Brechen der stirnseitigen Zahnkanten von Zahnrädern, bei der ein erstes Werkzeug drehfest und ein zweites Werkzeug frei drehbar auf der Werkzeugspindel gelagert ist.

Aufgrund der oben genannten Probleme im Stand der Technik liegt der Erfindung die Aufgabe zugrund, eine oben beschriebene Anordnung insbesondere im Hinblick auf eine möglichst einfache Anpassung des Werkzeugrads an das zu bearbeitende Werkstückrad zu verbessern.

Diese Aufgabe wird von der Erfindung durch eine Weiterbildung der oben genannten Anordnung gemäß Anspruch 1 bereitgestellt, die im wesentlichen dadurch gekennzeichnet ist, daß die Anordnung eine elastische Einrichtung aufweist, gegen deren Rückstellkraft die Richtung der Drehachse des Werkzeugrades gegenüber der Richtung der Drehachse- der Werkzeugaufnahme auslenkbar ist.

Dabei beruht die Erfindung auf dem Gedanken, daß zur passenden Bearbeitung unterschiedlicher Chargen von Werkstückrädern eine Änderung des Werkzeugrads gar nicht erforderlich ist. Vielmehr wird durch die Auslenkbarkeit der Drehachsenrichtung des Werkzeugrads gegen die Rückstellkraft der elastischen Einrichtung bewirkt, daß durch den Eingriff des zu bearbeitenden Werkstückrads mit dem Werkzeugrad eine passende relative Positionierung von Werkstückrad und Werkzeugrad automatisch erreicht wird. Geht man davon aus, daß bei nicht ausgelenkter Achse (die Drehachsen von Werkzeugrad und Werkzeugaufnahme fallen zusammen) das Werkzeugrad passend auf ein Werkstück einer Charge mit vorgegebenen Vorhaltewerten ausgelegt ist, werden bei Bearbeitung eines Zahnrads einer Charge mit unterschiedlichen Vorhaltewerten aufgrund der unterschiedlichen Zahnflankenform des Werkstückrads bei dessen Bearbeitung durch das Werkzeugrad Kräfte auf das Werkzeugrad ausgeübt, die in die Werkzeugaufnahme eingeleitet werden. Bei herkömmlichen Anordnungen steht dieser Kraft die feste Einspannung des Werkzeugrads in die Werkzeugaufnahme entgegen. Im Gegensatz dazu ist bei der erfindungsgemäßen Anordnung durch die Auslenkbarkeit der Drehachsenrichtung des Werkzeugrades eine Anpassung der Werkzeugradebene an das bearbeitete Werkstückrad möglich, und die Auslenkung erfolgt somit auch in Anpassung an das Werkstückrad automatisch. Gleichzeitig wird durch die Rückstellkraft der elastischen Einrichtung sichergestellt, daß die Auslenkung nur bei tatsächlicher Kraftbeanspruchung erfolgt, und die Drehachsen von Werkzeugrad und Werkzeugaufnahme ohne Kraftbeanspruchung wieder übereinstimmen, (Ruhelage der Anordnung). Insbesondere ist die Verzahnung des Werkzeugrades für die Bearbeitung zylindrisch verzahnter Werkstückräder ebenfalls zylindrisch.

In einer besonders bevorzugten Ausführungsform ist vorgesehen, daß die zwischen dem Werkzeugrad und der Werkzeugaufnahme wirkende Rückstellkraft axial gerichtet ist. Somit wird das Werkzeugrad im Rahmen der zulässigen Auslenkbewegung axial zuverlässig gehalten.

Erfindungsgemäß ist vorgesehen, daß das Werkzeugrad in der Werkzeugaufnahme radial unverrückbar ist. Dadurch findet bei der Bearbeitung des Werkstückrads keine radiale Relativbewegung zwischen den Rädern statt.

Dabei weist die Halterung ein der radialen Führung dienendes radialschnittlich zylindrisches Lager auf. Dieses kann radiale Abstützkräfte zuverlässig aufnehmen.

Erfindungsgemäß ist das Lager in einem Bereich der Anordnung gebildet, in dem eine axiale Bohrung des Werkzeugrads von einem Achsenabschnitt der Werkzeugaufnahme durchdrungen ist. Somit kann das Werkzeugrad weiterhin vorteilhaft auf den Achsenabschnitt der Werkzeugaufnahme aufgesetzt werden, was eine zuverlässige Aufnahme des Werkzeugrads sicherstellt.

Dabei ist es besonders bevorzugt vorgesehen, daß der Achsenabschnitt in seinem axialen Mittenbereich radial nach außen gewölbt ist, und die Wölbung Teil des Lagers ist. Durch die Auswölbung wird somit ein Bereich bereitgestellt, an dem eine der Wölbung gegenüberliegende Fläche des Werkzeugrads bei dessen Auslenkung abrollen oder kippen kann.

Zweckmäßig ist die Wölbung ein Teil einer Kugeloberfläche, deren Kugelmittelpunkt mit dem Schnittpunkt der beiden Drehachsen bei ausgelenktem Werkzeugrad übereinstimmt. Betrachtet man den statischen Fall in einem axialen Längsschnitt durch die Anordnung, ist die Werkzeugradebene um eine senkrecht zur Schnittebene und durch die Drehachsen der Werkzeugnahme bzw. des Werkzeugrads drehbar.

Besonders bevorzugt ist ein die drehfeste Verbindung bewirkender Nutenstein an einer seiner den axialen Nutwänden zugewandten axialen Seitenflächen ballig ausgebildet.

Durch diese Balligkeit, die vorzugsweise anoden beiden axialen Seitenflächen vorgesehen ist, wird das für die gegenseitige Auslenkung der beiden Drehachsen X, Y erforderliche Bewegungsspiel innerhalb der den Nutenstein aufnehmenden Nuten der Werkzeugaufnahme und des Werkzeugrades zur Verfügung gestellt.

In einer alternativen Ausführungsform kann auch vorgesehen sein, daß eine Nabenfläche der Bohrung des Werkzeugrads in ihrem axialen Mittelbereich radial nach innen zur Drehachse hin ausgewölbt ist. Bei Auslenkung des Werkzeugrads ergibt sich wiederum eine Abroll- oder Kippbewegung zweier Flächen aufeinander.

Zweckmäßig ist die der Wölbung des Achsenabschnitts/der Nabenfläche gegenüberliegende Nabenfläche der Fläche des Achsenabschnitts als Kreiszylinderfläche gebildet. Somit können einfach herzustellende Flächen für die Bauteile der Anordnung vorgesehen werden.

In einer besonders bevorzugten Ausführungsform ist vorgesehen, daß die elastische Einrichtung axial zwischen Werkzeugaufnahme und Werkzeugrad angeordnet ist.

Erfindungsgemäß weist die Werkzeugaufnahme für eine passende axiale Halterung des Werkzeugrads einen an den Achsenabschnitt anschließenden und diesen radial überragenden ersten Seitenabschnitt auf, wodurch es zumindest hinsichtlich der Grundform der Werkzeugaufnahme keiner Veränderung gegenüber herkömmlichen Werkzeugaufnahmen bedarf. Die elastische Einrichtung kann wenigstens teilweise axial zwischen einer dem Werkzeugrad zugewandten Fläche des ersten Seitenabschnitts und der dieser Fläche gegenüberliegenden Fläche des Werkzeugrads angeordnet sein. So kann eine geeignete Rückstellkraft bereitgestellt werden.

Vergleichbares gilt für die axial andere Seite des Achsenabschnitts. So kann die Werkzeugaufnahme einen auf den Achsenabschnitt lösbar aufspannbaren und diesen radial überragenden zweiten Seitenabschnitt aufweisen, und die elastische Einrichtung kann wenigstens teilweise axial zwischen einer dem Werkzeug zugewandten Fläche des zweiten Seitenabschnitts und der dieser Fläche gegenüberliegenden Fläche des Werkzeugrads angeordnet sein. Somit kann das Werkzeugrad einfach gewechselt werden, es wird axial zuverlässig gehalten, und eine Auslenkung in bezüglich der Ruhelage entgegengesetzte Auslenkrichtungen wird möglich.

Besonders zweckmäßig ist vorgesehen, daß die elastische Einrichtung einen elastischen O-Ring aufweist, insbesondere aus zwei elastischen O-Ringen besteht. Die O-Ringe können nicht nur vorteilhaft einfach in die Verbindung zwischen Werkzeugaufnahme und Werkzeugrad integriert werden, sondern können auch eine ausreichende Rückstellkraft bereitstellen.

Dabei kann vorgesehen sein, daß an der Werkzeugaufnahme eine Ausnehmung zur zumindest teilweisen Aufnahme der elastischen Einrichtung, insbesondere des einen oder der zwei O-Ringe gebildet ist.

Alternativ oder zusätzlich kann vorgesehen sein, daß an dem Werkzeugrad eine Ausnehmung zur zumindest teilweisen Aufnahme der elastischen Einrichtung, insbesondere des einen oder der zwei O-Ringe gebildet ist.

Besonders bevorzugt ist vorgesehen, daß die Stärke der Rückstellkraft der elastischen Einrichtung einstellbar ist. Diesbezüglich ist vorgesehen, daß ein Abstandhalter zwischen zwei Teile der Werkzeugaufnahme einspannbar ist, etwa eine Distanzscheibe. Die Einstellbarkeit der Rückstellkraft kann somit auch durch die Auswahl der axialen Abmessung des Abstandhalters über eine Vorspannung der elastischen Einrichtung in der Ruhelage erfolgen.

Durch die Auslenkbarkeit des Werkzeugrads entsteht in dynamischer Betrachtung eine Taumelbewegung des Werkzeugrads. Dazu ist bevorzugt vorgesehen, daß eine Ausdehnung der Taumelstrecke, d. h. eine effektive Positionsabweichung des Werkzeugrads im Bearbeitungsbereich zur Bearbeitung der stirnseitigen Randbereiche der Zahnflanken des stirnverzahnten Werkstückrads im Vergleich zur entsprechenden Position des Werkzeugrads in Ruhelage der Anordnung in dem Bereich von 5 bis 50 µm, bevorzugt 10 bis 40 µm, insbesondere 20 bis 30 µm liegt.

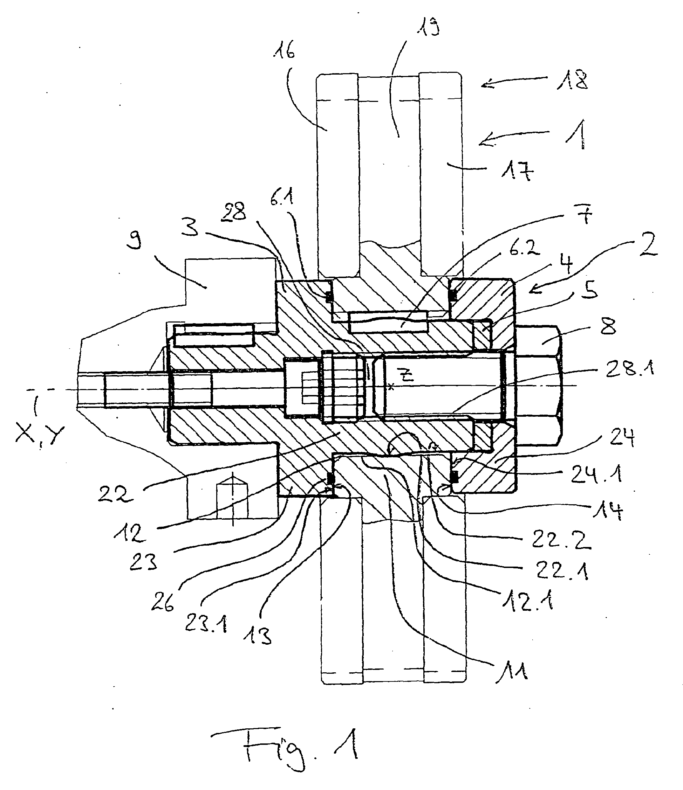

Weitere Merkmale, Vorteile und Einzelheiten der Erfindung ergeben sich aus der nachfolgenden Beschreibung der beiliegenden Zeichnung, deren einzige Figur 1 eine Anordnung aus einem drehfest mit einer Werkzeugaufnahme verbunden Werkzeugrad in einem axialen Längsschnitt zeigt.

Die in der Längsschnittdarstellung von Fig. 1 abgebildete Werkzeugaufnahme 2 ist mit ihrem Hauptteil 3 in üblicher Weise in eine Werkzeugspindel 9 so eingespannt, daß sie von der Werkzeugspindel 9 um die Drehachse Y der Werkzeugaufnahme 2 in Rotation versetzt werden kann. In eine Bohrung 28 mit Gewinde 28.1 auf der der Werkzeugspindel 9 entgegengesetzten Seite der Werkzeugaufnahme 2 kann ein im Längsschnitt U-förmiges Aufspannteil 4 der Werkzeugaufnahme 2 auf das Hauptteil 3 aufgespannt werden, wobei zwischen dem Aufspannteil 4 und dem Hauptteil 3 ein ringförmiger Abstandhalter 5 angeordnet ist. Die axiale Ausdehnung des Abstandhalters 5 legt den axialen Abstand zwischen sich gegenüberliegenden Ringflächen 23.1 und 24.1 von Hauptteil 3 und Aufspannteil 4 fest.

In diesem axialen Bereich, also zwischen Seitenbereichen 23 und 24 der Werkzeugaufnahme 2, ist deren Achsenabschnitt 22 einstückig mit dem Seitenabschnitt 23 gebildet, auf den bei abgenommenen Aufspannteil 4 mit Seitenabschnitt 24 ein mit einer Axialbohrung 12 ausgestattetes Werkzeugrad 1 aufgesetzt werden kann. Bei der in Fig. 1 gezeigten Lage des Werkzeugzeugrads 1 gegenüber der Werkzeugaufnahme 2 fällt die Drehachse X des Werkzeugrads 1 mit der Drehachse Y der Werkzeugaufnahme 2 zusammen.

Soweit bis jetzt beschrieben, ähnelt die in Fig. 1 gezeigte Anordnung einer herkömmlichen Anordnung zur drehfesten Verbindung von Werkzeugaufnahme 2 und Werkzeugrad 1, wobei die Drehfestigkeit über einen Nutenstein 7 erreicht wird, der in Drehrichtung die Lage von Werkzeugaufnahme 2 und Werkzeugrad 1 fixiert.

Allerdings ist die radiale Außenfläche des Achsenabschnitts 22 der Werkzeugaufnahme 2 nur an seinen axialen Endbereichen 22.2 kreiszylinderförmig gebildet, während der axial mittige Bereich der radialen Außenfläche in Form einer Kugelfläche 22.1 gegenüber der Kreiszylinderfläche 22.2 nach außen gewölbt ist. Der Durchmesser der axialen Bohrung 12 des Werkzeugrads 1 ist auf den Durchmesser der durch die Kugelfläche 22.1 definierten Kugel abgestimmt, deren Mittelpunkt Z auf der Achse Y liegt. Dadurch ergibt sich beim Aufsitz des Werkzeugrads 1 auf dem Achsenabschnitt 22 der Werkzeugaufnahme 2 eine Anlage zwischen der Kugelfläche 22.1 der Werkzeugaufnahme 2 und dem ihr gegenüberliegenden Bereich der Nabenfläche 12.1 des Werkzeugrads 1, während in der in Fig. 1 gezeigten symmetrischen Ruhelage zwischen den kreiszylindrischen Flächen 12.1 und 22.2 ein Ringspalt gebildet ist.

Da gleichzeitig die Aufspannung des Aufspannteils 4 auf den Hauptteil 3 so gewählt ist, daß im Aufspannbereich der Abstand zwischen den Flächen 23.1 und 24.1 geringfügig größer als die axiale Abmessung des Werkzeugrads 1, d.h. als der Abstand zwischen den zu den Flächen 23.1 und 24.1 weisenden Flächen 13 und 14 des Werkzeugrads 1, ist, besteht auch in axialer Richtung zwischen den Flächen 23.1 und 13 sowie den Flächen 24.1 und 14 ein geringfügiges Spiel. Die Halterung des Werkzeugrads 1 in der Werkzeugaufnahme 2, genauer gesagt, des an die Nabenfläche 12.1 angrenzenden Bereichs 11 des Werkzeugrads 1 in dem durch die Flächen 23.1, 22.1, 22.2 und 24.1 begrenzten Raum ist somit nicht fest. Vielmehr ist, in der in Fig. 1 gezeigten Darstellung, eine Schwenkung oder Auslenkung des Werkzeugrads 1 um jede zur Drehachse Y orthogonale und durch den Mittelpunkt Z der Kugelfläche 22.1 verlaufende Achse möglich. Bei einer solchen Schwenkung wird die Richtung der Drehachse X des Werkzeugrads 1 gegenüber der Richtung der Drehachse Y der Werkzeugaufnahme 2 ausgelenkt, da die Drehachse X orthogonal zu der Umlaufebene des Werkzeugrads 1 steht.

Allerdings kann eine solche Schwenkung oder Auslenkung der Drehachse X nicht kraftfrei erfolgen. Vielmehr wird durch einen an der Fläche 23.1 der Werkzeugaufnahme 2 aus einer zur Drehachse Y koaxialen ringförmigen Ausnehmung 26 axial vorspringenden elastischen O-Ring 6.1 und einen aus einer entsprechenden Ausnehmung der Fläche 24.1 axial vorspringenden zweiten elastischen O-Ring 6.2 sichergestellt, daß das Werkzeugrad 1 durch diese beiden O-Ringe elastisch in der in Fig. 1 gezeigten Lage gehalten ist, die der Ruhelage der Anordnung entspricht und bei der die Drehachsen X und Y zusammenfallen. Wirkt aber gegen die elastische Rückstellkraft eines der elastischen O-Ringe 6.1 oder 6.2 eine Kraft auf das Werkzeugrad 1, so erfolgt die oben beschriebene Auslenkbewegung, und die Drehachse X wird gegenüber der Drehachse Y ausgelenkt. Diese flexible Halterung des Werkzeugrads 1 gegenüber der Werkzeugaufnahme 2 ist gegenüber einer bewegungsfesten Halterung dann von Vorteil, wenn geringfügig unterschiedliche Werkstückräder von dem Werkzeugrad zu bearbeiten sind, beispielsweise aufgrund der im einleitenden Teil der Beschreibung genannten Unterschiede in den Vorhaltewerten von Werkstücken unterschiedlicher Chargen. Für das folgende wird angenommen, daß die in Fig. 1 gezeigte Ruhelage der Bearbeitungssituation für eine Charge Werkstückräder entspricht, bei der die Verzahnung 18 des Werkzeugrades 1 für die Bearbeitung der endseitigen Randbereiche der Zahnflanken der Werkstückräder vollständig angepaßt ist, und daß die somit ohne (unsymmetrische) Krafteinwirkung auf das Werkzeugrad 1 ausgeführte Bearbeitung dieser Werkstückräder in der nicht ausgelenkten Ruhelage erfolgt.

Ändern sich nun die Werkstückräder einer weiteren Charge beispielsweise aufgrund von Fertigungstoleranzen beim vorherigen Wälzfräsen der Werkstückräder, und wird ein solches Werkstückrad auf die Werkstückspindel 9 der Maschine gesetzt, würde bei beibehaltener starrer Halterung des Werkzeugrads 1 in der Werkzeugaufnahme 2 wegen des geänderten Zahnflankenverlaufs eine unbefriedigende Bearbeitung der endseitigen Randbereiche der Zahnflanken des Werkstückrads erfolgen. Beispielsweise würde an einer Endseite bei der Entgratung und Bildung einer Fase zu viel Material abgetragen, während an der gleichen Zahnflanke an der anderen Endseite überhaupt kein Material abgenommen würde und eine ausreichende Umwandlung in eine Fase fehlschlagen würde. Sofern das Werkzeugrad 1 mit einem Glättrad kombiniert ist, wäre ferner dessen Glättfunktion nicht sichergestellt.

Dies wird durch die Auslenkbarkeit der Drehachsenrichtung des Werkzeugrads 1 vermieden. So drückt der Randbereich der Zahnflanke an der ersten Seite, an der nach obiger Erläuterung eine zu starke Materialabtragung zu befürchten wäre, im Eingriff mit der Verzahnung 18 des Werkzeugrads 1 gegen die gerade arbeitende Bearbeitungsfläche des Werkzeugrads 1 und übt somit eine Kraft auf das Werkzeugrad 1 aus. Bei fixierter Halterung würde eine derartige Kraft in die Werkzeugaufnahme 2 eingeleitet werden, und aufgrund der starren Verbindung von Werkzeugrad 1 und Werkzeugaufnahme 2 ohne weiteres kompensiert werden.

Bei der flexiblen Halterung des Werkzeugrads 1 bewirkt diese Kraft dagegen gegen die elastische Rückstellkraft der entsprechend belasteten O-Ringe 6.1 oder 6.2 eine Auslenkbewegung des Werkzeugrads 1 relativ zu der Werkzeugaufnahme 2, was einer Auslenkung der Drehachse X gegenüber der Drehachse Y entspricht.

Die Folge dieser Auslenkung ist, daß sich die Lage des Werkzeugrads 1 an den geänderten Zahnflankenverlauf des bearbeiteten Werkstücksrads der oben genannten weiteren Charge anpaßt. Die Bearbeitungsfläche des Werkzeugrads 1 wird näher an den Zahnflankenrandbereich des Werkstückrads auf dessen anderer Seite gedrängt, und kann diesen Randbereich ausreichend bearbeiten, z. B. Material abnehmen, eine Fase bilden und gegebenenfalls die Sekundärgrate glätten. Es wird somit automatisch erreicht, daß die Randbereiche der Zahnflanken auch bei deren geringfügig abweichendem Verlauf gegenüber einer vorgegebenen Voreinstellung dennoch an beiden Seiten bearbeitet werden.

Das Werkzeugrad 1 kann selbst einstückig oder mehrteilig (16, 17, 19) ausgeführt sein, eine Aufspaltung in zwei Hälften, wie in der EP 1 270 127 A1 beschrieben, ist aber nicht zwingend erforderlich, ebensowenig wie die passende Einstellung der beiden Hälften zueinander.

Die in Fig. 1 gezeigte Anordnung ist dabei so ausgelegt, daß sich die bei dynamischer Betrachtung des Bearbeitungsvorgangs ergebende Taumelbewegung des Werkzeugrads um eine Achse senkrecht zur Werkzeugachse im Bearbeitungsbereich in der Größenordnung von 20 bis 30 µm bewegt. Damit die oben beschriebene Anpassung zuverlässig stattfinden kann, ist eine nicht zu hohe Drehzahl des Werkzeugrads 1 von etwa 30 bis 200 U/min, insbesondere 100 bis 150 U/min vorgesehen.

### Bezugszeichenliste:

- 1: Werkzeugrad
- 2: Werkzeugaufnahme
- 3: Hauptteil
- 4: Aufspannteil
- 5: Abstandshalter
- 6.1, 6.2: elastische O-Ringe
- 7: Nutenstein
- 8: Gewindeschraube
- 9: Werkzeugspindel
- 11: gehaltener Bereich
- 12: axiale Bohrung
- 12.1: Nabenfläche
- 13: axiale Randfläche
- 14: axiale Randfläche
- 16: erstes Rad
- 17: zweites Rad
- 18: Verzahnung
- 19: Führungsrad
- 22: Achsenabschnitt
- 22.1: Kugelfläche
- 22.2: Zylinderfläche
- 23: erster Seitenbereich
- 23.1: Ringfläche
- 24: zweiter Seitenbereich
- 24.1: Ringfläche
- 26: Ausnehmung
- 28: Gewindebohrung
- 28.1: Gewinde
- X: Drehachse (Werkzeugrad)
- Y: Drehachse (Werkzeugaufnahme)
- Z: Mittelpunkt

## Patentansprüche

1. Anordnung (6, 7) zur drehfesten Verbindung zwischen einem zur Bearbeitung endseitiger Randbereiche von Zahnflanken endverzahnter Werkstückräder dienenden, eine Drehachse (X) aufweisenden endverzahnten Werkzeugrad (1) und einer um eine Drehachse (Y) drehend antreibbaren Werkzeugaufnahme (2), enthaltend ein endverzahntes Werkzeugrad (1), sowie eine drehend antreibbare Werkzeugaufnahme (2),
wobei die Anordnung in einem Bereich (12, 22), in dem eine axiale Bohrung (12) des Werkzeugrads (1) von einem Achsenabschnitt (22) der Werkzeugaufnahme durchdrungen ist, ein radiafschnittlich zylindrisches Lager aufweist, gegen das das Werkzeugrad (1) in der Werkzeugaufnahme (2) radial unverrückbar geführt ist, und die Anordnung weiter eine axiale Halterung mit einem auf den Achsenabschnitt (22) zu dessen einer Seite lösbar aufspannbaren und diesen radial überragenden Seitenabschnitt (24) der Werkzeugaufnahme (2) aufweist,
**dadurch gekennzeichnet, dass** die Anordnung eine elastische Einrichtung (6) aufweist, gegen deren Rückstellkraft die Richtung der Drehachse (X) des Werkzeugrades (1) gegenüber der Richtung der Drehachse (Y) der Werkzeugaufnahme (2) auslenkbar ist, und dass die elastische Einrichtung (6.2) wenigstens teilweise axial zwischen einer dem Werkzeug (1) zugewandten Fläche (24.1) des aufspannbaren Seitenabschnitts (24) und der dieser Fläche (24.1) gegenüberliegenden Fläche (14) des Werkzeugrads (1) angeordnet ist.

2. Anordnung nach Anspruch 1, **dadurch gekennzeichnet, dass** die zwischen dem Werkzeugrad (1) und der Werkzeugaufnahme (2) wirkende Rückstellkraft axial gerichtet ist.

3. Anordnung nach Anspruch 1 oder 2, **dadurch gekennzeichnet, dass** der Achsenabschnitt (22) in seinem axialen Mittenbereich radial nach außen gewölbt ist, und die Wölbung (22.1) Teil des Lagers ist.

4. Anordnung nach Anspruch 3, **dadurch gekennzeichnet, dass** die Wölbung (22.1) Teil einer Kugeloberfläche ist, deren Kugelmittelpunkt (Z) mit dem Schnittpunkt der beiden Drehachsen (X, Y) bei ausgelenktem Werkzeugrad (1) übereinstimmt.

5. Anordnung nach Anspruch 3 oder 4, **dadurch gekennzeichnet, dass** ein die drehfeste Verbindung bewirkender Nutenstein (7) an seinen den axialen Nutwänden zugewandten axialen Seitenflächen ballig ausgebildet ist.

6. Anordnung nach Anspruch 1, **dadurch gekennzeichnet, dass** eine Nebenfläche der Bohrung des Werkzeugrads in ihrem axialen Mittenbereich radial nach innen zur Drehachse hin ausgewölbt ist, und die Wölbung Teil des Lagers ist.

7. Anordnung nach einem der Ansprüche 3 bis 6, **dadurch gekennzeichnet, dass** die der Wölbung (22.1) des Achsenabschnitts 1 der Nabenfläche gegenüberliegende Nabenfläche (12.1) / Fläche des Achsenabschnitts als Kreiszylinderfläche gebildet ist.

8. Anordnung nach einem der vorhergehenden Ansprüche, **dadurch gekennzeichnet, dass** die elastische Einrichtung (6) axial zwischen Werkzeugaufnahme (2) und Werkzeugrad (1) angeordnet ist.

9. Anordnung nach einem der Ansprüche 1 bis 8, **dadurch gekennzeichnet, dass** die Werkzeugaufnahme (2) einen an den Achsenabschnitt (22) an dessen anderer Seite anschließenden und diesen radial überragenden weiteren Seitenabschnitt (23) aufweist, und die elastische Einrichtung (6.1) wenigstens teilweise axial zwischen einer dem Werkzeugrad (1) zugewandten Fläche (23.1) des weiteren Seitenabschnitts (23) und der dieser Fläche (23.1) gegenüberliegenden Fläche (13) des Werkzeugrads (1) angeordnet ist.

10. Anordnung nach einem der vorhergehenden Ansprüche, **dadurch gekennzeichnet, dass** die elastische Einrichtung (6) einen elastischen O-Ring (6.1) aufweist, insbesondere aus zwei elastischen O-Ringen (6.1, 6.2) besteht.

11. Anordnung nach einem der vorhergehenden Ansprüche, **dadurch gekennzeichnet, dass** an der Werkzeugaufnahme (2) eine Ausnehmung zur zumindest teilweisen Aufnahme der elastischen Einrichtung (6), insbesondere des einen oder der zwei O-Ringe (6.1, 6.2) gebildet ist.

12. Anordnung nach einem der vorhergehenden Ansprüche, **dadurch gekennzeichnet, dass** an dem Werkzeugrad eine Ausnehmung zur zumindest teilweisen Aufnahme der elastischen Einrichtung, insbesondere des einen oder der zwei O-Ringe gebildet ist.

13. Anordnung nach einem der vorhergehenden Ansprüche, **dadurch gekennzeichnet, dass** die Stärke der Rückstellkraft der elastischen Einrichtung einstellbar ist.

14. Anordnung nach Anspruch 13, **dadurch gekennzeichnet, dass** die Einstellbarkeit der Stärke der Rückstellkraft über einen zwischen zwei Teile der Werkzeugaufnahme einspannbaren Abstandhalter (5) erfolgt.

15. Anordnung nach einem der vorhergehenden Ansprüche, **dadurch gekennzeichnet, dass** die Auslenkbarkeit der Drehachse des Werkzeugrades so ausgelegt ist, dass eine mit der Auslenkung der Drehachse bei rotierendem Werkzeugrad auftretende Taumelbewegung des Werkzeugrads im Bearbeitungsbereich eine Ausdehnung im Bereich von 5 bis 50 µm, bevorzugt 10 bis 40 µm, insbesondere 20 bis 30 µm hat.

## Claims

1. An arrangement (6, 7) for the non-rotational connection between an end-toothed tool wheel (1) for the machining of end peripheral regions of tooth flanks of end-toothed workpiece wheels which has an axis of rotation (X), and a tool holder (2) that can be driven rotationally around an axis of rotation (Y), containing an end-toothed tool wheel (1) and a rotationally driven tool holder (2),
the arrangement having in a region (12, 22), in which an axis intercept (22) of the tool holder passes through an axial bore hole (12) of the tool wheel (1), a bearing with a cylindrical radial section against which the tool wheel (1) is guided, radially immoveably, in the tool holder (2), and the arrangement further comprising an axial holder with a side section (24) of the tool holder (2) that can be clamped releaseably onto the axis intercept (22) on its one side and projecting radially over the latter,
**characterised in that** the arrangement has an elastic means (6) against the restoring force of which the direction of the axis of rotation (X) of the tool wheel (1) can be displaced relative to the direction of the axis of rotation (Y) of the tool holder (2), and that the elastic means (6.2) is arranged at least partially axially between a surface (24.1) of the clampable side section (24) facing the tool (1) and the surface (14) of the tool wheel (1) opposite this surface (24.1).

2. The arrangement according to Claim 1, **characterised in that** the restoring force acting between the tool wheel (2) and the tool holder (2) is directed axially.

3. The arrangement according to Claim 1 or 2, **characterised in that** the axis intercept (22) is curved radially outwards in its axial centre region and the curvature (22.1) is part of the bearing.

4. The arrangement according to Claim 3, **characterised in that** the curvature (22.1) is part of a spherical surface, the sphere centre point (Z) of which corresponds to the intersection point of the two axes of rotation (X, Y) when the tool wheel (1) is displaced.

5. The arrangement according to Claim 3 or 4, **characterised in that** a sliding block (7) bringing about the non-rotational connection is formed in a crowned fashion on its axial side surfaces facing the axial groove walls.

6. The arrangement according to Claim 1, **characterised in that** an adjacent area of the bore hole of the tool wheel is curved radially inwards towards the axis of rotation in its axial centre region, and the curvature is part of the bearing.

7. The arrangement according to any of Claims 3 to 6, **characterised in that** the hub surface (12,1)/surface of the axis intercept opposite the curvature (22.1) of the axis intercept/ the hub surface is in the form of a circular cylinder surface.

8. The arrangement according to any of the preceding claims, **characterised in that** the elastic means (6) is arranged axially between the tool holder (2) and the tool wheel (1).

9. The arrangement according to any of Claims 1 to 8, **characterised in that** the tool holder (2) has a further side section (23) connected to the axis intercept (22) on the other side of the latter and projecting over the latter radially, and the elastic means (6.1) is arranged at least partially axially between a surface (23.1) of the further side section (23) facing the tool wheel (1) and the surface (13) of the tool wheel (1) opposite this surface (23.1).

10. The arrangement according to any of the preceding claims, **characterised in that** the elastic means (6) has an elastic O-ring (6.1), and in particular is comprised of two elastic O-rings (6.1, 6.2).

11. The arrangement according to any of the preceding claims, **characterised in that** there is formed on the tool holder (2) a recess for at least partially holding the elastic means (6), in particular the one or the two O-rings (6.1, 6.2).

12. The arrangement according to any of the preceding claims, **characterised in that** there is formed on the tool wheel a recess for at least partially holding the elastic means, in particular the one or the two O-rings.

13. The arrangement according to any of the preceding claims, **characterised in that** the strength of the restoring force of the elastic means is adjustable.

14. The arrangement according to Claim 13, **characterised in that** the strength of the restoring force is adjusted by means of a spacer (5) that can be clamped between two parts of the tool holder.

15. The arrangement according to any of the preceding claims, **characterised in that** the displaceability of the axis of rotation of the tool wheel is designed such that a wobbling of the tool wheel in the machining area, which occurs when the axis of rotation is displaced while the tool wheel is rotating, has an expansion in the range of 5 to 50 µm, preferably 10 to 40 µm, in particular 20 to 30 µm.

## Revendications

1. Dispositif (6, 7) permettant la liaison solidaire en rotation entre une roue dentée formant outil (1), possédant une denture terminale et présentant un axe de rotation (X), et servant à l'usinage de bords d'extrémité de flancs de dents de roues formant pièces à usiner à denture terminale, et un porte-outil (2) susceptible d'être entraîné en rotation sur un axe de rotation (Y), comportant une roue dentée formant outil (1) à denture terminale, ainsi qu'un porte-outil (2) susceptible d'être entraîné en rotation,
dans lequel le dispositif présente, dans une zone (12, 22) dans laquelle un alésage axial (12) de la roue dentée formant outil (1) est traversé par une section d'axe (22) du porte-outil, un palier qui est cylindrique en coupe radiale contre lequel la roue dentée formant outil (1) est placée dans le porte-outil (2) de manière radialement fixe, et le dispositif présente en outre un support axial comportant une section latérale (24) du porte-outil (2) pouvant être resserrée d'un côté de manière amovible vers la section d'axe (22), ladite section latérale (24) faisant radialement saillie sur ledit côté,
**caractérisé en ce que** le dispositif présente un organe élastique (6) contre la force de rappel duquel la direction de l'axe de rotation (X) de la roue dentée formant outil (1) peut être déplacée par rapport à la direction de l'axe de rotation (Y) du porte-outil (2), et **en ce que** l'organe élastique (6.2) est disposé, de manière au moins partiellement axiale, entre une surface (24.1) de la section latérale (24) qui est tournée vers l'outil (1) et est susceptible d'être resserrée et la surface (14) de la roue dentée formant outil (1) qui fait face à ladite surface (24.1).

2. Dispositif selon la revendication 1, **caractérisé en ce que** la force de rappel agissant entre la roue dentée formant outil (1) et le porte-outil (2) est orientée dans le sens axial.

3. Dispositif selon la revendication 1 ou 2, **caractérisé en ce que** la section d'axe (22) est bombée vers l'extérieur dans sa partie axiale médiane, et le bombement (22.1) fait partie du palier.

4. Dispositif selon la revendication 3, **caractérisé en ce que** le bombement (22.1) fait partie d'une surface sphérique dont le centre de sphère (Z) coïncide avec le point d'intersection des deux axes de rotation (X, Y) lorsque la roue dentée formant outil (1) est déplacée.

5. Dispositif selon la revendication 3 ou 4, **caractérisé en ce qu'**un coulisseau (7) effectuant la liaison solidaire en rotation est conçu bombé sur ses surfaces latérales axiales tournées vers les parois axiales de la rainure.

6. Dispositif selon la revendication 1, **caractérisé en ce qu'**une surface côté moyeu de l'alésage de la roue dentée formant outil est bombée radialement vers l'intérieur dans sa partie centrale axiale, vers l'axe de rotation, et le bombement fait partie du palier.

7. Dispositif selon l'une des revendications 3 à 6, **caractérisé en ce que** la surface côté moyeu (12.1)/surface de la section d'axe faisant face au bombement (22.1) de la section d'axe/surface côté moyeu est conçue sous la forme d'une surface cylindrique circulaire.

8. Dispositif selon l'une des revendications précédentes, **caractérisé en ce que** l'organe élastique (6) est disposé axialement entre le porte-outil (2) et la roue dentée formant outil (1).

9. Dispositif selon l'une des revendications 1 à 8, **caractérisé en ce que** le porte-outil (2) présente une section latérale supplémentaire (23) qui est contiguë à la section d'axe (22) au niveau de son autre côté et qui fait saillie radialement par rapport à cette dernière, et l'organe élastique (6.1) est disposé au moins partiellement axialement entre une surface (23.1) de la section latérale supplémentaire (23) tournée vers la roue dentée formant outil (1) et la surface (13) de la roue dentée formant outil (1) faisant face à cette surface (23.1).

10. Dispositif selon l'une des revendications précédentes, **caractérisé en ce que** l'organe élastique (6) présente un joint torique (6.1) élastique, constitué notamment de deux joints toriques (6.1, 6.2) élastiques.

11. Dispositif selon l'une des revendications précédentes, **caractérisé en ce que** le porte-outil (2) présente un évidement destiné à recevoir au moins en partie l'organe élastique (6), notamment l'un ou les deux joints toriques (6.1, 6.2).

12. Dispositif selon l'une des revendications précédentes, **caractérisé en ce que** la roue dentée formant outil présente un évidement destiné à recevoir au moins en partie l'organe élastique, notamment l'un ou les deux joints toriques.

13. Dispositif selon l'une des revendications précédentes, **caractérisé en ce que** la force de rappel de l'organe élastique est une force réglable.

14. Dispositif selon la revendication 13 **caractérisé en ce que** la capacité de réglage de la force de rappel est assurée par une entretoise (5) pouvant être enserrée entre deux parties du porte-outil.

15. Dispositif selon l'une des revendications précédentes, **caractérisé en ce que** le déplacement de l'axe de rotation de la roue dentée formant outil est conçu de telle manière qu'un mouvement de basculement de la roue dentée formant outil, produit par le déplacement de l'axe de rotation lorsque la roue dentée formant outil tourne, présente, dans la zone d'usinage, une expansion de l'ordre de 5 à 50 µm, de préférence de l'ordre de 10 à 40 µm, notamment de 20 à 30 µm.
